# EUROPÄISCHE PATENTANMELDUNG

(11) **EP 3 925 426 A1**
(43) Veröffentlichungstag der Anmeldung: **22.12.2021**
(21) Anmeldenummer: 21180514.8
(22) Anmeldetag: 21.06.2021
(51) Int. Cl.: A01B 69/00, A01B 69/04

(54) **VORRICHTUNG AN LANDMASCHINEN ZUR ABTASTUNG VON KONTUREN SOWIE VERFAHREN ZUR STEUERUNG DER LANDMASCHINE**

(30) Priorität: 19.06.2020 AT 505262020
(71) Anmelder: IDeAS GmbH & Co KG, 3701 Grossweikersdorf (AT)
(72) Erfinder: Peschak, Bernhard, 3701 Grossweikersdorf (AT)
(74) Vertreter: Müllner, Martin

(57) **Zusammenfassung**

Zur berührungslosen Abtastung von sich über dem Boden erstreckenden Konturen weist eine Vorrichtung an Landmaschinen (11) einen Laser-Scanner (8) auf, der Laserstrahlen aussendet und aus der Laufzeitmessung des an einem Konturpunkt reflektierten Laserstrahls die Entfernung zu diesem Konturpunkt bestimmt. Mit einer Auswerteeinrichtung wird auf Grund der Entfernung und des Winkels des ausgesendeten Laserstrahls die Position des Konturpunkts berechnet. Erfindungsgemäß werden die Laserstrahlen zumindest in einer Ebene, die parallel zum Boden ist, ausgesandt, wobei vorzugsweise der Laserscanner maximal 1 m vom Boden entfernt ist. Auf diese Weise werden z.B. in einem Weingarten nur die Positionen der Stämme der Weinstöcke bestimmt, die Belaubung kann die Messwerte nicht beeinflussen. Zur Steuerung der Landmaschine werden durch die Positionen der Pflanzen (21), die der Landmaschine benachbart sind, ein bzw. zwei Streckenzüge (23) gelegt, und die Landmaschine (11) wird in einem vorgegebenen Abstand zu solch einem Streckenzug (23) bzw. in einem vorgegebenen Abstand zur Mittellinie zwischen den zwei Streckenzügen (23) gesteuert.

## Beschreibung

### Technisches Gebiet

Die vorliegende Erfindung betrifft eine Vorrichtung an Landmaschinen zur berührungslosen Abtastung von sich über dem Boden erstreckenden Konturen, mit einem Laser-Scanner, der Laserstrahlen aussendet und aus der Laufzeitmessung des an einem Konturpunkt reflektierten Laserstrahls die Entfernung zu diesem Konturpunkt bestimmt, und mit einer Auswerteeinrichtung, die auf Grund der Entfernung und des Winkels des ausgesendeten Laserstrahls die Position des Konturpunkts berechnet. Sie betrifft weiters ein Verfahren zur Steuerung einer Landmaschine zwischen Pflanzenreihen, insbesondere zwischen Reihen von Rebstöcken, mittels Daten, die von solch einer Vorrichtung geliefert werden.

### Stand der Technik

Solch eine Vorrichtung ist aus DE 19726917 A bekannt. Bei dieser Vorrichtung ist die Strahlenebene nach unten geneigt, im Ausführungsbeispiel um 25°, und der Laserscanner ist relativ hoch angebracht, im Ausführungsbeispiel in 3,80 m Höhe. Im Betrieb wird während der Fahrt der Landmaschine fortlaufend aus den ermittelten Entfernungswerten die Kontur über die Abtastbreite ermittelt und gespeichert, sodass insgesamt (durch Zusammensetzen der einzelnen Messergebnisse während der Fahrt) ein dreidimensionales Abbild der realen Konturen ermittelt wird. Im Ausführungsbeispiel ist an einen Ladewagen gedacht, der eine Heuschwade aufnehmen soll. Die Vorrichtung dient zur Steuerung des Ladewagens, damit dieser so fährt, dass er die Heuschwade mittig aufnehmen kann, auch wenn diese nicht genau entlang einer Geraden liegt.

Nachteilig bei diesem System ist, dass nur relativ wenig weit vorausgeschaut wird, im Ausführungsbeispiel rund 8 m (3,80 m/tan(25°)).

Solch ein System ist für Weingärten nur schlecht geeignet. Einerseits befinden sich im Erfassungsbereich des Laserscanners nur wenige Rebstöcke, und von denen wird hauptsächlich das Laub erkannt, das durchaus sehr unregelmäßig wachsen kann.

Wenn nun die Vorrichtung so eingestellt ist, dass sie die Landmaschine in konstantem Abstand zur linken Rebstockreihe halten soll, dann wird sie die Landmaschine je nach Belaubung in unterschiedlichem Abstand zu den Stämmen lenken.

Wenn die Vorrichtung so eingestellt ist, dass sie die Landmaschine genau in der Mitte zwischen den angrenzenden Rebstockreihen halten soll, und nun z.B. das Laub des rechten Rebstocks wesentlich weiter in die Gasse zwischen den Rebstöcken hineinwächst als das Laub des linken Rebstocks, wird die bekannte Vorrichtung die Landmaschine (z.B. den Traktor) nach links lenken, sodass die Gefahr besteht, dass der linke Rebstock beschädigt wird.

Noch problematischer wird es, wenn einige Rebstöcke hintereinander in einer Reihe fehlen, eine Reihe also unterbrochen ist. Dann erfasst das bekannte System nur Rebstöcke der nächsten Reihe. Wenn in konstantem Abstand zur angrenzenden Reihe gefahren werden soll, dann steuert die bekannte Vorrichtung die Landmaschine unter Umständen in die benachbarte Gasse, also zur nächsten Reihe hinüber; und wenn mittig gefahren werden soll, dann steuert die Vorrichtung die Landmaschine unter Umständen so, dass sie genau auf die unterbrochene Reihe zufährt.

Ähnliches gilt für Hopfenplantagen oder Obstplantagen.

### Kurzbeschreibung der Erfindung

Es ist Aufgabe der vorliegenden Erfindung, die Vorrichtung der eingangs erwähnten Art so abzuändern, dass sie für Weingärten, Hopfenplantagen und Obstplantagen besser geeignet ist.

Diese Aufgabe wird durch eine Vorrichtung der eingangs genannten Art erfindungsgemäß dadurch gelöst, dass die Laserstrahlen zumindest in einer Ebene, die parallel zum Boden ist, ausgesandt werden. Diese Parallelität muss nicht hochpräzise sein, eine Abweichung von 1° (oder je nach Höhe der Strahlenebene auch von 2°) schadet nicht wesentlich. Auf diese Weise kann sehr weit vorausgeschaut werden (bei exakter Parallelität und ebenem Boden so weit, wie dies der Erfassungsbereich des Laserscanners zulässt), sodass die Gasse zwischen den Rebstöcken sehr genau erfasst werden kann, auch dann, wenn mehrere Rebstöcke in einer Reihe fehlen. In der Praxis wird man rund 20 m weit voraus schauen.

Wenn es sich um einen 2D-Laser-Scanner handelt, so sendet dieser die Laserstrahlen nur in einer Ebene aus. Diese Ebene soll erfindungsgemäß parallel zum Boden sein. Es kann sich aber auch um einen 3D-Laserscanner handeln, der Laserstrahlen in alle Richtungen aussendet und somit auch in einer Ebene parallel zum Boden. Wichtig ist, dass Laserstrahlen parallel zum Boden ausgesendet werden; zusätzliche Richtungen schaden nicht.

Insbesondere bei Weingärten ist es günstig, wenn der Laserscanner maximal 1 m vom Boden entfernt ist. Denn dann wird immer der Stamm des Rebstocks vermessen und nicht das Laub, sodass eine unregelmäßige Belaubung keinen Einfluss auf die Präzision der Steuerung hat. Bei Obstplantagen kann die Strahlenebene auch höher liegen, sie soll jedoch unterhalb der Baumkrone liegen.

Infolge dieser Vorrichtung kann man erfindungsgemäß durch die Positionen der Pflanzen, die der Landmaschine benachbart sind, ein bzw. zwei Streckenzüge legen und die Landmaschine in einem vorgegebenen Abstand zu solch einem Streckenzug bzw. in einem vorgegebenen Abstand zur Mittellinie zwischen den zwei Streckenzügen steuern, wodurch sich einzelne Messungenauigkeiten kaum auswirken. Dabei kann man zur Erhöhung der Genauigkeit zusätzlich auch die Positionen der Pflanzen der jeweils nächsten Reihe links und/oder rechts ermitteln und auch durch diese Positionen ein bzw. zwei Streckenzüge legen. Auf diese Weise kann man den Abstand zwischen der unmittelbar benachbarten Reihe und der nächsten Reihe bestimmen. Wenn nun eine unmittelbar benachbarte Reihe über ein längeres Stück unterbrochen ist, kann man sich an der nächsten Reihe orientieren, weil ja der Abstand zwischen diesen Reihen zuvor bestimmt werden konnte.

Wenn die Pflanzen relativ genau entlang einer Geraden liegen, kann man statt des Streckenzugs auch eine Ausgleichsgerade legen, denn die einzelnen Strecken des Streckenzugs bilden zumindest theoretisch eine Geradenstück, und wo wirken sich Messfehler weniger aus.

Zur Ermittlung der Ausgleichsgeraden bzw. von Streckenzügen innerhalb der Pflanzenreihe zur Bestimmung der Abstände des Fahrzeugs zu den Pflanzenreihen können unterschiedliche Verfahren angewendet werden.

### Kurze Beschreibung der Zeichnungsfiguren

An Hand der beiliegenden Zeichnungen wird die vorliegende Erfindung näher erläutert. Es zeigt: Fig. 1 eine erfindungsgemäße Landmaschine; Fig. 2 ein typisches Ergebnis der Objekterfassung in einem Weingarten; Fig. 3 eine Rebstock-Reihe dieses Ergebnisses mit einer Ausgleichsgeraden; Fig. 4 zeigt den Erfassungsbereich der Hinderniserkennung; und Fig. 5 zeigt eine mögliche Steuerung.

### Beschreibung der Ausführungsarten

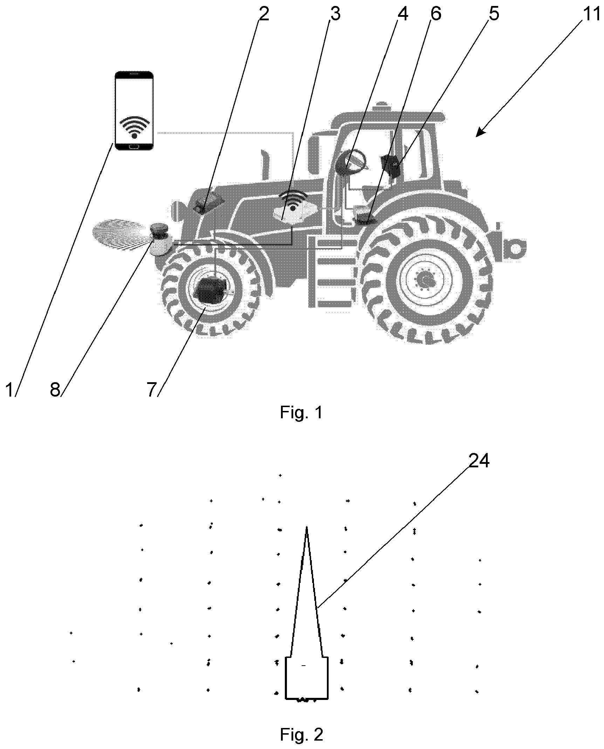

Ein Laserscanner 8 (siehe Fig. 1) an der Front einer Landmaschine 11, insbesondere eines Traktors, dient als Sensor zur Umgebungserfassung. Ein DC/DC-Konverter 2 erzeugt aus der Bordspannung der Landmaschine 11 (üblicher Weise 12 V) die notwendige Versorgungsspannung des Laserscanners 8 (z.B. 24 V). Dieser erfasst die Reihenkultur im Umkreis von 20 m und sendet die Sensordaten an einen Prozessor 3, der diese anschließend verarbeitet. An diesen Prozessor 3 ist auch ein Lenkwinkelsensor 7 für die Vorderräder der Landmaschine 11 angeschlossen.

Das System wird über ein User-Interface parametriert (z.B. Soll-Abstand zur Kultur), das entweder als eigenes Terminal oder als App auf einem Smartphone 1 ausgeführt sein kann. Die Kommunikation mit dem Smartphone erfolgt vorzugsweise über ein Wifi-Modem , das mit dem Prozessor 3 in Verbindung steht. Ein zusätzlicher Aktivierungstaster 5, der in der Landmaschine 11 fix verbaut ist, ermöglicht die Aktivierung des Systems in der Reihenkultur. Gewisse Rahmenbedingungen müssen erfüllt sein, um das System aktivieren zu können. Dazu gehören beispielsweise Betätigung eines Sitzbelegungsschalters 6, die erfolgreiche Erkennung einer Reihenkultur in den Sensordaten, Vorwärtsbewegung des Fahrzeuges etc.

In Fig. 2 ist eine Visualisierung der Laserscandaten in einem Weingarten dargestellt. Dabei entsprechen die schwarzen Punkte den Rebstöcken.

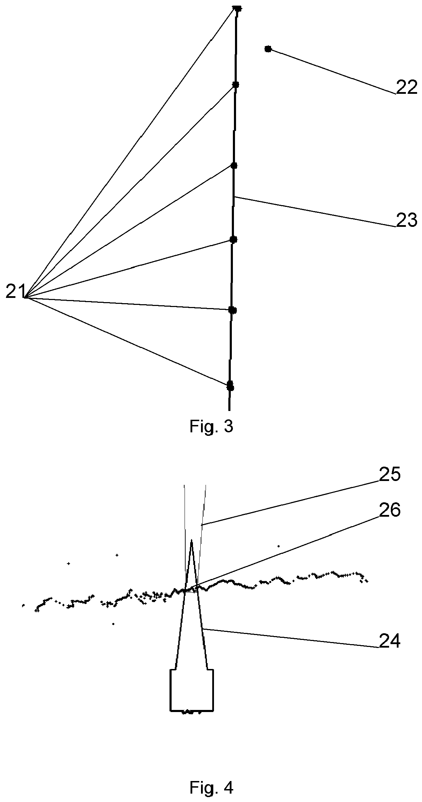

In Fig. 3 ist eine Reihe von Rebstöcken 21 als Punkte dargestellt. Durch diese Punkte wird eine Ausgleichsgerade 23 gelegt. Somit kann der Abstand vom Fahrzeug zu dieser Reihe ermittelt werden. In der Praxis werden einige Punkte deutlich neben der Reihe liegen, das können z.B. hohe Grashalme sein. In Fig. 3 ist beispielsweise ein Objekt 22 eingezeichnet, das deutlich neben der Ausgleichsgeraden 23 liegt. Solche "Ausreißer" werden bei der Berechnung der Ausgleichsgeraden nicht berücksichtigt.

Zusätzlich zu hohen Grashalmen oder ähnlichen statischen Objekten können auch intermittierende Störungen auftreten, beispielsweise durch Vögel, die durch den Weingarten fliegen, oder bei Regen durch größere Tropfen. Solche intermittierende Störungen können leicht weggefiltert werden, indem man aufeinanderfolgende Scans vergleicht, wobei man natürlich den zwischenzeitlich von der Landmaschine zurückgelegten Weg berücksichtigt.

Nachdem die Ausgleichsgerade ermittelt wurde, kann der aktuelle Ist-Abstand der Landmaschine (des Traktors) zu der Reihenkultur berechnet werden. Der User muss durch das User Interface einen Soll-Abstand zur Reihe oder einen Offset von der Mitte eingeben. Basierend auf diesen Daten kann ein Stellsignal für einen Lenkaktor berechnet werden. Dies kann ein nachgerüsteter Lenkradmotor sein oder auch ein Signal für einen für Autoguidance vorgerüsteten Traktor, bei dem direkt mit dem Hydraulikcontroller der Lenkung kommuniziert wird. Ein Lenkwinkelsensor erfasst den aktuellen Lenkeinschlag und ermöglicht somit die Schließung des Lenkregelkreises.

In Fig. 4 (und auch in Fig. 2) ist ein Bereich 24 schwarz umrandet. Dieser Bereich 24 kennzeichnet den Wirkbereich der Hinderniserkennung. Tritt ein Objekt 26, das gewisse Rahmenbedingungen erfüllt (z.B. Mindestgröße), in diesen Bereich ein, erfolgt eine akustische Warnung für den Fahrer und auch eine optische Warnung durch eine farbige Linie 25.

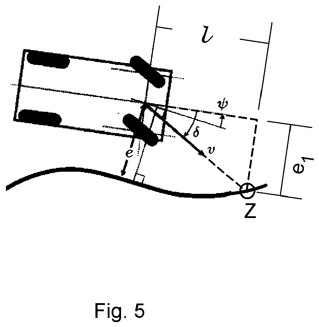

Für die Stellsignalberechnung der Landmaschine 11 können unterschiedliche Algorithmen angewendet werden, man kann zum Beispiel wie folgt (siehe auch Fig. 5) vorgehen:

Die Position und die Lage der Landmaschine mit Geschwindigkeit v kann durch den Abstand e der gelenkten Räder und den Gierwinkel ψ bezüglich dem nächsten Segment der zu verfolgenden Trajektorie beschrieben werden.

Eine lookahead-Distanz I definiert einen Zielpunkt auf der Trajektorie. Die lookahead-Distanz I wird abhängig von der Fahrgeschwindigkeit v berechnet. Je schneller das Fahrzeug unterwegs ist, desto größer ist sie. Man bestimmt nun den Punkt Z auf der Trajektorie, der in diesem Abstand I vor der Landmaschine liegt. Den seitlichen Abstand dieses Punktes Z bezeichnen wir mit e₁. Der Lenkwinkel δ soll stets diesen Punkt Z auf der Trajektorie anvisieren. Somit kann der Lenkwinkel δ durch δ = arctan(I/e₁) berechnet werden. Der berechnete Lenkwinkel δ wird anschließend in ein passendes Stellsignal für die Lenkaktuatorik transferiert. Dies kann ein nachrüstbarer Lenkradmotor oder auch ein ansteuerbares Hydraulik-Lenkventil der Landmaschine sein. Da die Lookahead-Distanz I mit zunehmender Fahrgeschwindigkeit v zunimmt, nimmt die Empfindlichkeit der Steuerung mit zunehmender Geschwindigkeit ab.

## Patentansprüche

1. Vorrichtung an Landmaschinen (11) zur berührungslosen Abtastung von sich über dem Boden erstreckenden Konturen, mit einem Laser-Scanner (8), der Laserstrahlen aussendet und aus der Laufzeitmessung des an einem Konturpunkt reflektierten Laserstrahls die Entfernung zu diesem Konturpunkt bestimmt, und mit einer Auswerteeinrichtung, die auf Grund der Entfernung und des Winkels des ausgesendeten Laserstrahls die Position des Konturpunkts berechnet, **dadurch gekennzeichnet, dass** die Laserstrahlen zumindest in einer Ebene, die parallel zum Boden ist, ausgesandt werden.

2. Vorrichtung nach Anspruch 1, **dadurch gekennzeichnet, dass** der Laserscanner maximal 1 m vom Boden entfernt ist.

3. Verfahren zur Steuerung einer Landmaschine (11) zwischen Pflanzenreihen, insbesondere zwischen Reihen von Rebstöcken, mittels Daten, die von der Vorrichtung nach einem der Ansprüche 1 bis 2 geliefert werden, **dadurch gekennzeichnet, dass** durch die Positionen der Pflanzen (21), die der Landmaschine benachbart sind, ein bzw. zwei Streckenzüge (23) gelegt werden und die Landmaschine (11) in einem vorgegebenen Abstand zu solch einem Streckenzug (23) bzw. in einem vorgegebenen Abstand zur Mittellinie zwischen den zwei Streckenzügen (23) gesteuert wird.

4. Verfahren nach Anspruch 3, **dadurch gekennzeichnet, dass** zur Erhöhung der Genauigkeit zusätzlich auch die Positionen der Pflanzen der jeweils nächsten Reihe links und/oder rechts ermittelt werden und auch durch diese Positionen ein bzw. zwei Streckenzüge gelegt werden.

5. Verfahren nach Anspruch 3 oder 4, **dadurch gekennzeichnet, dass** man - wenn die Pflanzen entlang einer Geraden liegen- den Streckenzug durch eine Ausgleichsgerade nähert.
